# EUROPEAN PATENT APPLICATION

(11) **EP 2 375 656 A1**
(43) Date of publication of application: **12.10.2011**
(21) Application number: 11156288.0
(22) Date of filing: 28.02.2011
(51) Int. Cl.: H04L 12/56, H04W 40/12

(54) **Wireless communication apparatus and data relay method**

(30) Priority: 31.03.2010 JP 2010083785
(71) Applicant: Fujitsu Limited, Kawasaki-shi, Kanagawa 211-8588 (JP)
(72) Inventor: Wen, Yun, Kawasaki-shi Kanagawa 211-8588 (JP); Fujita, Hiroshi, Kawasaki-shi Kanagawa 211-8588 (JP); Yoshida, Makoto, Kawasaki-shi Kanagawa 211-8588 (JP)
(74) Representative: Holz, Ulrike

(57) **Abstract**

An optimum path storage unit (10) stores optimum paths on all wireless communication devices that can be destinations of data. A reception unit (20) receives relay data as a relay target. A QoS judgment unit (30) reads out an optimum path corresponding to a QoS requirement of relay data from the optimum path storage unit (10) and judges whether or not the QoS requirement of data is satisfied by the optimum path. The QoS judgment unit (30) outputs the relay data to a transmission unit (40) when it is judged such that the QoS requirement is satisfied. The transmission unit (40) transmits the relay data to the next node on the optimum path. When the QoS requirement of the relay data is not satisfied by the optimum path, a NACK information generation unit (50) generates NACK information that includes the fact that transmission of the relay data has been interrupted and transmits the NACK information to neighboring wireless communication devices.

## Description

### FIELD

The embodiments discussed herein are directed to a wireless communication device and a data relay method.

### BACKGROUND

In recent years, a study on a wireless ad-hoc network in which wireless communication devices are directly connected with each other without an access point, for example, in a wireless local area network (LAN) has been conducted. In the wireless ad-hoc network, data transmitted by a wireless communication device as a transmission source of data is relayed by another wireless communication device and arrives at a wireless communication device as a destination. At this time, the transmission quality of data changes according to a communication environment in a transmission path between the wireless communication devices. For this reason, each wireless communication device generally searches for an optimum transmission path by using an evaluation function and stores an optimum path in a path table. Specifically, the wireless communication device receives a path information packet that is transmitted periodically by another wireless communication device that periodically transmits the path information packet in order to report information of the transmission path between itself and a neighboring wireless communication device. The wireless communication device evaluates a path to a wireless communication device that could be the destination of data by using the information reported through the path information packet and decides an optimum path to each wireless communication device.

In order to decide the optimum path, an evaluation function that corresponds to a quality of service (QoS) criterion such as a delay, a throughput, and a link quality may be used. For example, when the transmission path having the smallest delay is used as the optimum path, the optimum path is decided by using an evaluation function for calculating a delay of each transmission path. Further, a study on deciding the optimum path by deciding ranking of a transmission path between the wireless communication devices by an evaluation function in which a plurality of QoS criteria is combined has been conducted.

Since each wireless communication device decides the optimum path based on the same path information packet and evaluation function, all wireiess communication devices that are present on the optimum path decided by the wireless communication device that is a transmission source of data, stores the same optimum path as in the transmission source wireless communication device in their path table. Therefore, if the transmission source wireless communication device transmits data to the next wireless communication device on the optimum path, the wireless communication device that has received the data, relays the data through the same optimum path as decided by the transmission source wireless communication device. As a result, the data is transmitted to the destination wireless communication device via the optimum path.

Reference may be made to, for example, Japanese Laid-open Patent Publication No. 2009-124303 and Japanese Laid-open Patent Publication No. 2003-324443.

However, even if data is transmitted through the optimum path, there is a problem in that the QoS required for the data is not certainly satisfied. For example, various QoSs are demanded on data in terms of a real time property. In this case, the QoS requirement is not certainly satisfied by the optimum path and the quality of received data in the destination wireless communication device may not meet the criterion.

In order to avoid this problem, the transmission source wireless communication device may judge whether or not the optimum path satisfies the QoS requirement of data at the time of transmission, and only when the QoS requirement is satisfied, data may be transmitted through the optimum path. However, since a radio environment of the transmission path changes, for example, due to movement of the wireless communication device, even if the optimum path satisfies the QoS requirement when the transmission source wireless communication device transmits data, the optimum path may not satisfy the QoS requirement during data transmission. In this case, since the quality of received data in the destination wireless communication device does not finally satisfy the criterion, the received data is discarded, and retransmission of the data may occur. As a result, traffic increases, so that resources of the wireless communication device that relays data are wasted or interference in the neighboring wireless communication device increases.

Accordingly, it is an object in one aspect of an embodiment of the invention to provide a wireless communication device and a data relay method which prevents an increase in traffic and prompts a decrease in interference on communication therearound.

### SUMMARY

According to an aspect of an embodiment of the invention, a wireless communication apparatus includes a storage unit that stores optimum paths to each of a plurality of destination apparatuses, the optimum paths providing best quality of data transmission on each of criteria representing the quality of data transmission, a reception unit that receives data to be transmitted to any one of the plurality of destination apparatuses, and a relay unit that relays the received data to a next apparatus on an optimum path stored in the storage unit when required quality of the received data is satisfied by the optimum path corresponding to a criterion representing the required quality of the received data and the any one of the plurality of destination apparatuses, and interrupts transmission of the received data when the required quality of the received data is not satisfied by the optimum path.

### BRIEF DESCRIPTION OF DRAWINGS

FIG. 1 is a block diagram illustrating a configuration of a wireless communication device according to a first embodiment;
FIG. 2 is a flowchart illustrating a data relay method according to the first embodiment;
FIG. 3 is a diagram illustrating a configuration example of an ad-hoc network according to a second embodiment;
FIG. 4 is a block diagram illustrating configurations of wireless communication devices according to the second embodiment;
FIG. 5 is a diagram illustrating a detailed example of a path table according to the second embodiment;
FIG. 6 is a flowchart illustrating a data relay method according to the second embodiment;
FIG. 7 is a flowchart illustrating a NACK reception process according to the second embodiment;
FIG. 8 is a diagram illustrating a detailed example of a data relay according to the second embodiment; and
FIG. 9 is a diagram illustrating a hardware configuration example of a computer.

### DESCRIPTION OF EMBODIMENTS

Preferred embodiments of the present invention will be explained with reference to accompanying drawings. The present invention is not limited to the embodiments.

### [a] First Embodiment

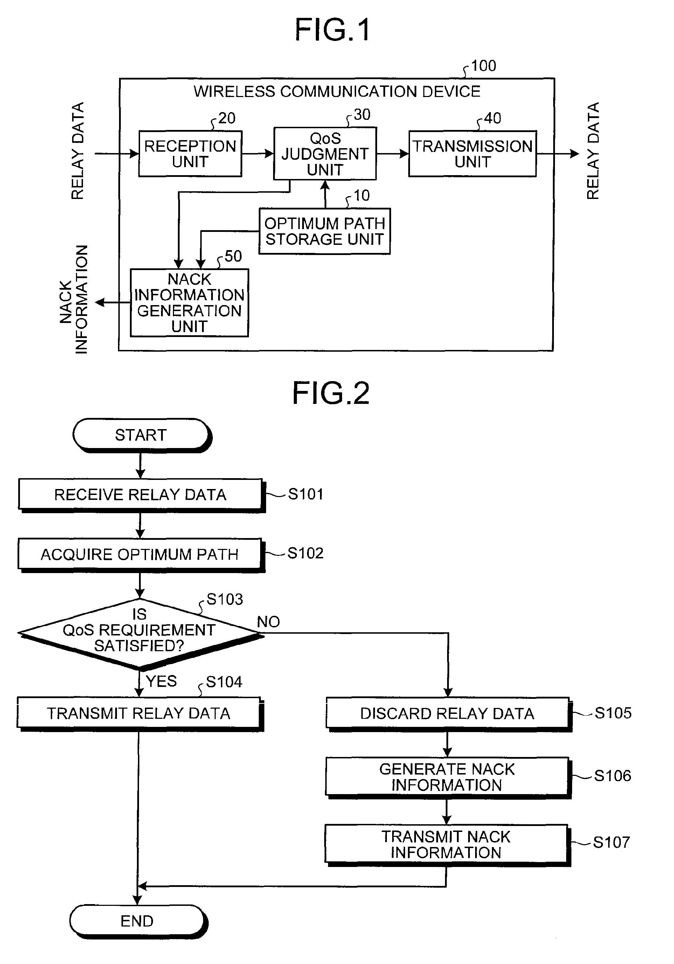

FIG. 1 is a block diagram illustrating a configuration of a wireless communication device 100 according to a first embodiment. The wireless communication device 100 illustrated in FIG. 1 is disposed on an optimum path of data transmitted from a transmission source wireless communication device (not illustrated) and relays data to be transmitted to a destination wireless communication device. Specifically, the wireless communication device 100 includes an optimum path storage unit 10, a reception unit 20, a QoS judgment unit 30, a transmission unit 40, and a NACK information generation unit 50.

The optimum path storage unit 10 stores optimum paths for all wireless communication devices that could be the destinations of data. Specifically, the optimum path storage unit 10 stores the next wireless communication device (hereinafter, referred to as "next node") in the optimum path for each destination wireless communication. For example, the next node stored in the optimum path storage unit 10 is the next node on the optimum path obtained from the path information packet periodically transmitted by each wireless communication device. The next node is constantly updated to the next node in the latest optimum path according to a change of a communication environment.

Further, the optimum path storage unit 10 stores an optimum path and an optimum value representing a QoS criterion of the optimum path on each of a plurality of QoS criteria such as a delay, a throughput, and a link quality. Therefore, the optimum path storage unit 10 stores the next node on the optimum path for each QoS criterion on all wireless communication devices.

The reception unit 20 receives relay data as a relay target transmitted from a transmission source wireless communication device or another wireless communication device (not illustrated). The relay data received by the reception unit 20 is required to meet a predetermined criterion on the QoS such as a delay, a throughput, or a link quality. The relay data may be required to meet a plurality of QoS criteria, but any one QoS requirement is considered to be dominant.

The QoS judgment unit 30 reads out the optimum path corresponding to the QoS requirement of the relay data from the optimum path storage unit 10 and judges whether or not the optimum value representing the QoS of the optimum path satisfies the QoS requirement of the relay data. When the optimum value satisfies the QoS requirement, the QoS judgment unit 30 notifies the transmission unit 40 of the next node on the optimum path and outputs the relay data to the transmission unit 40. However, when the optimum value does not satisfy the QoS requirement, the QoS judgment unit 30 notifies the NACK information generation unit 50 of the fact and discards the relay data.

When the relay data is output from the QoS judgment unit 30, the transmission unit 40 transmits the relay data to the next node on the optimum path. Here, since the QoS judgment unit 30 judges such that the optimum path satisfies the QoS requirement of the relay data, the relay data to be transmitted by the transmission unit 40 does not act as unnecessary traffic.

When the QoS judgment unit 30 notifies that the optimum path does not satisfy the QoS requirement of the relay data, the NACK information generation unit 50 generates NACK information representing that transmission of the relay data has been interrupted. Specifically, the NACK information generation unit 50 acquires the latest path information in the optimum path from the optimum path storage unit 10 and generates the NACK information that includes the path information and the fact that data transmission has been interrupted. The NACK information generation unit 50 transmits the NACK information to the neighboring wireless communication devices. The NACK information is reversely transmitted along the optimum path through which the relay data has been transmitted and transmitted back to the transmission source wireless communication device (not illustrated). Therefore, the transmission source wireless communication device recognizes that data transmission has been interrupted. Further, since the NACK information includes the latest path information related to the optimum path, the wireless communication device that has received the NACK information can update the optimum path stored therein to the latest state.

Subsequently, a data relay method performed by the wireless communication device 100 having the above-described configuration will be described with reference to a flowchart illustrated in FIG. 2.

In step S101, the reception unit 20 receives the relay data transmitted from the transmission source wireless communication device or another wireless communication device (not illustrated). In step S102, the relay data is output to the QoS judgment unit 30, and the QoS judgment unit 30 acquires the optimum path corresponding to the QoS requirement of the relay data from the optimum path storage unit 10. That is, the QoS judgment unit 30 acquires the next node on the optimum path corresponding to the QoS requirement of the relay data and the optimum value representing the QoS of the optimum path.

In step S103, the QoS judgment unit 30 compares the QoS requirement of the relay data with the optimum value in the optimum path to judge whether or not the optimum path satisfies the QoS requirement of the relay data. When it is judged such that the optimum path satisfies the QoS requirement (Yes in step S103), the transmission unit 40 transmits the relay data to the next node on the optimum path in step S104. Here, the relay data is transmitted through the optimum path, and it is judged such that the QoS requirement is satisfied. Thus, the relay data transmitted by the transmission unit 40 does not act as unnecessary traffic. As a result, it is possible to prevent interference from increasing due to unnecessary traffic increase.

Meanwhile, when even the optimum path does not satisfy the QoS requirement (No in step S103), the QoS judgment unit 30 discards the relay data and the NACK information generation unit 50 is notified of that the QoS requirement is not satisfied, in step S105. In step S106, the NACK information generation unit 50 acquires the latest path information of the optimum path from the optimum path storage unit 10 and generates the NACK information that includes the latest path information of the optimum path and the fact that data transmission has been interrupted. In step S107, the NACK information generation unit 50 transmits the generated NACK information to the neighboring wireless communication devices.

The NACK information is received by the neighboring wireless communication devices. The NACK information is reversely transmitted along the optimum path through which the relay data has been transmitted and transmitted back to the transmission source wireless communication device. Each wireless communication device that has received the NACK information updates the optimum path based on the latest optimum information. Therefore, when the transmission source wireless communication device retransmits data, since the optimum path has been updated to the latest state, the accurate QoS control can be performed.

As described above, according to the present embodiment, the wireless communication device judges whether or not the QoS requirement of the relay data is satisfied by comparing the QoS requirement of the relay data with the QoS of the latest optimum path corresponding to the QoS requirement. When it is judged such that the QoS requirement is satisfied the wireless communication device relays the relay data to the next node on the optimum path. However, when it is judged such that the QoS requirement is not satisfied, transmission of the relay data is interrupted and the NACK information is transmitted. Therefore, it is possible to prevent traffic from increasing due to transmission of data in which the QoS requirement is not satisfied, and it is possible to reduce interference on communications therearound caused by an increase in traffic.

### [b] Second Embodiment

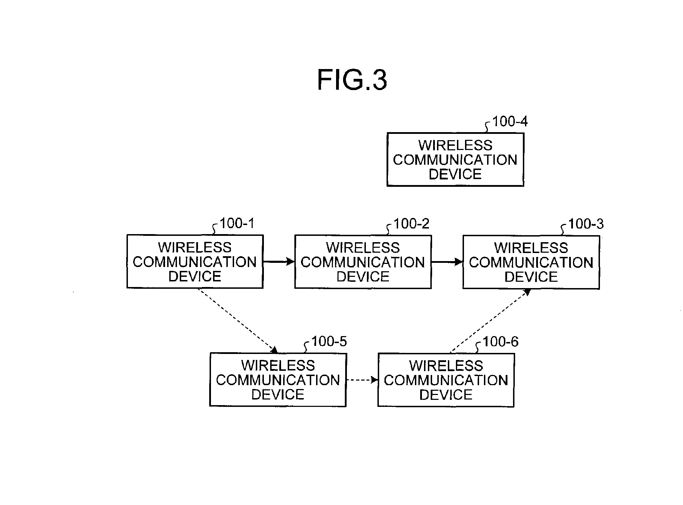

FIG. 3 is a diagram illustrating a configuration example of an ad-hoc network according to a second embodiment. The ad-hoc network illustrated in FIG. 3 includes wireless communication devices 100-1 to 100-6. The wireless communication devices 100-1 to 100-6 can communicate directly with each other. When a transmission source wireless communication device transmits data to a destination wireless communication device that is far from the transmission source wireless communication device, a wireless communication device located between the transmission source wireless communication device and the destination wireless communication device relays data.

Specifically, for example, when the wireless communication device 100-1 transmits data to the wireless communication device 100-3, for example, the wireless communication device 100-2 relays the data. At this time, each wireless communication device stores the optimum path for each QoS criterion and transmits the data through the optimum path corresponding to the QoS requirement of data. That is, the optimum path may be different depending on the QoS criterion. For example, the optimum path related to the delay is a path, indicated by a solid line in FIG. 3, in which data is relayed by the wireless communication device 100-2. For example, the optimum path related to the throughput is a path, indicated by a dotted line in FIG. 3, in which data is relayed by the wireless communication devices 100-5 and 100-6.

The wireless communication device on the optimum path for each QoS criterion judges whether or not the optimum path satisfies the QoS requirement of the relay data when the relay data is received. The wireless communication device transmits the relay data to the next node on the optimum path when it is judged such that the QoS requirement of the relay data is satisfied.

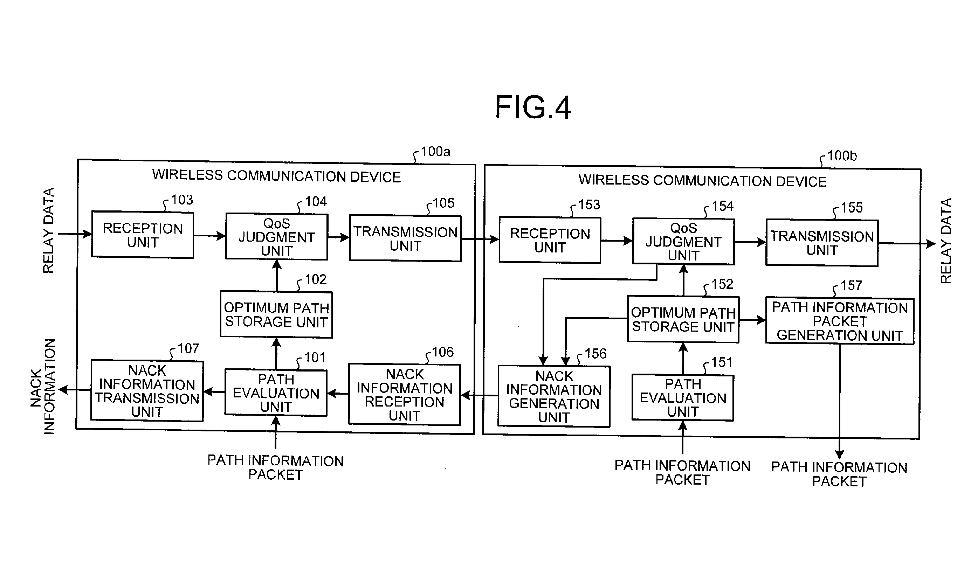

FIG. 4 is a block diagram illustrating configurations of wireless communication devices 100a and 100b according to the second embodiment. The wireless communication devices 100a and 100b are wireless communication devices neighboring with each other on the optimum path. It is assumed that the next node of the wireless communication device 100a is the wireless communication device 100b. Further, for convenience of description, FIG. 4 illustrates that the wireless communication devices 100a and 100b have different configurations, but the wireless communication devices 100a and 100b may have the same configuration.

The wireless communication device 100a includes a path evaluation unit 101, an optimum path storage unit 102, a reception unit 103, a QoS judgment unit 104, a transmission unit 105, a NACK information reception unit 106, and a NACK information transmission unit 107.

The path evaluation unit 101 receives the path information packet that is periodically transmitted from neighboring wireless communication devices inciuding the wireiess communication device 100b and evaluates the transmission path for each QoS criterion to all wireless communication devices that could be the destination of data. The path evaluation unit 101 decides the optimum path for each QoS criterion related to each wireless communication device. The path evaluation unit 101 re-evaluates the optimum path by using the latest path information of the optimum path included in the NACK information transmitted from the wireless communication device 100b.

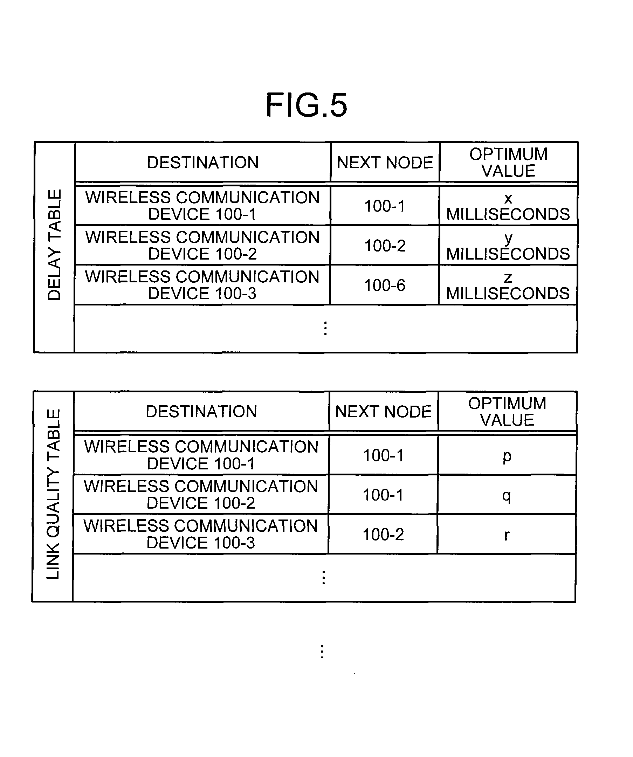

The optimum path storage unit 102 stores the optimum path for each wireless communication device and each QoS criterion decided by the path evaluation unit 101. Specifically, the optimum path storage unit 102 stores a path table for each QoS criterion as illustrated in FIG. 5. For example, the optimum path storage unit 102 includes a path table for each QoS criterion such as a delay and a link quality. The optimum path storage unit 102 stores the next node on the optimum path for each destination wireless communication device and the optimum value representing the actual QoS on each QoS criterion. For example, referring to a delay table in FIG. 5, it can be seen that in the optimum path in which the wireless communication device 100-1 is the destination, the next node is the wireless communication device 100-1, and the optimum value of the delay representing the QoS of the optimum path is x milliseconds. Similarly, it can be seen that in the optimum path in which the wireless communication device 100-3 is the destination, the next node is the wireless communication device 100-6, and the optimum value of the delay is z milliseconds. The next nodes in the optimum paths are decided in such a manner that the path evaluation unit 101 evaluates the optimum path based on the path information packet or the NACK information.

The reception unit 103 receives the relay data as the relay target transmitted from a transmission source wireless communication device or another wireless communication device (not illustrated). The relay data received by the reception unit 103 is required to satisfy a predetermined criterion on the QoS corresponding to any one path table stored in the optimum path storage unit 102. Further, the relay data may be required to satisfy a plurality of QoS criteria, but it is assumed that any one QoS requirement is dominant. Here, it is assumed that the QoS of the optimum path satisfies the QoS requirement on the relay data received by the reception unit 103 of the wireless communication device 100a.

The QoS judgment unit 104 reads out the optimum path corresponding to the QoS requirement of the relay data from the optimum path storage unit 102 and judges whether or not the optimum value representing the QoS of the optimum path satisfies the QoS requirement of the relay data. When the optimum value satisfies the QoS requirement, the QoS judgment unit 104 notifies the transmission unit 105 of the next node on the optimum path and outputs the relay data to the transmission unit 105. Here, since it is assumed that the optimum value satisfies the QoS requirement of the relay data, the relay data is output to the transmission unit 105. Further, when the optimum value does not satisfy the QoS requirement, the QoS judgment unit 104 notifies a NACK information generation unit (not illustrated) of the fact that the optimum value does not satisfy the QoS requirement and discards the relay data.

When the relay data is output from the QoS judgment unit 104, the transmission unit 105 transmits the relay data to the next node on the optimum path. Here, since the QoS judgment unit 104 has judged such that the optimum path satisfies the QoS requirement of the relay data, the relay data transmitted by the transmission unit 105 does not act as unnecessary traffic.

The NACK information reception unit 106 receives the NACK information transmitted from the wireless communication device 100b. The NACK information received by the NACK information reception unit 106 includes the fact that transmission of the relay data has been interrupted and the latest path information of the optimum path through which the relay data has been transmitted. Therefore, the path evaluation unit 101 updates the information of the optimum path stored in the optimum path storage unit 102 by using the latest path information included in the NACK information. The path information included in the NACK information is path information of the optimum path through which the relay data has actually been transmitted, the optimum path to the destination wireless communication device on any one QoS criterion can be updated.

When the NACK information is received from the wireless communication device 100b, the NACK information transmission unit 107 reversely transmits the NACK information along the optimum path through which the relay data has actually been transmitted. That is, the NACK information transmission unit 107 transmits the NACK information to an immediately previous wireless communication device on the optimum path. At this time, the NACK information transmission unit 107 transmits the NACK information that includes the path information of the optimum path subsequent to the wireless communication device 100a.

Meanwhile, the wireless communication device 100b includes a path evaluation unit 151, an optimum path storage unit 152, a reception unit 153, a QoS judgment unit 154, a transmission unit 155, a NACK information generation unit 156, and a path information packet generation unit 157.

Similarly to the path evaluation unit 101, the path evaluation unit 151 receives the path information packet that is periodically transmitted from neighboring wireless communication devices including the wireless communication device 100a and evaluates the transmission path for each QoS criterion to all wireless communication devices that could be the destination of data. The path evaluation unit 151 decides the optimum path for each QoS criterion related to each wireless communication device. The path evaluation unit 151 re-evaluates the optimum path by using the latest path information of the optimum path included in the NACK information transmitted from the next node (not illustrated) of the wireless communication device 100b.

Similarly to the optimum path storage unit 102, the optimum path storage unit 152 stores the optimum path for each wireless communication device and each QoS criterion decided by the path evaluation unit 151. Specifically, the optimum path storage unit 152 includes a path table for each QoS criterion and stores the next node on the optimum path for each destination wireless communication device and the optimum value representing the actual QoS on each QoS criterion.

The reception unit 153 receives the relay data as the relay target transmitted from the wireless communication device 100a. The relay data received by the reception unit 153 is required to satisfy a predetermined criterion on the QoS corresponding to any one path table stored in the optimum path storage unit 152.

The QoS judgment unit 154 reads out the optimum path corresponding to the Qos requirement of the relay data from the optimum path storage unit 152 and judges whether or not the optimum value representing the QoS of the optimum path satisfies the QoS requirement of the relay data. When the optimum value satisfies the QoS requirement, the QoS judgment unit 154 notifies the transmission unit 155 of the next node on the optimum path and outputs the relay data to the transmission unit 155. However, when the optimum value does not satisfy the QoS requirement, the QoS judgment unit 154 notifies the NACK information generation unit 156 of the fact and discards the relay data.

When the relay data is output from the QoS judgment unit 154, the transmission unit 155 transmits the relay data to the next node on the optimum path. Here, since the relay data that is output to the transmission unit 155 is the relay data of which the QoS judgment unit 154 has judged that the optimum path satisfies the QoS requirement, the relay data transmitted by the transmission unit 155 does not act as unnecessary traffic.

When the QoS judgment unit 154 notifies that the optimum path does not satisfy the QoS requirement of the relay data, the NACK information generation unit 156 generates the NACK information including the fact that transmission of the relay data has been interrupted. Specifically, the NACK information generation unit 156 acquires the latest path information in the optimum path from the optimum path storage unit 152 and generates the NACK information including the latest path information and the fact that transmission of the relay data has been interrupted. The NACK information generation unit 156 transmits the NACK information to the neighboring wireless communication devices including the wireless communication device 100a. Since the NACK information includes the latest path information related to the optimum path, the neighboring wireless communication devices that receive the NACK information can update the optimum path stored therein to the latest state.

The path information packet generation unit 157 generates a path information packet representing a communication environment of a transmission path from the wireless communication device 100b to another wireless communication device based on the information of the optimum path stored in the optimum path storage unit 152 and periodically transmits the path information packet.

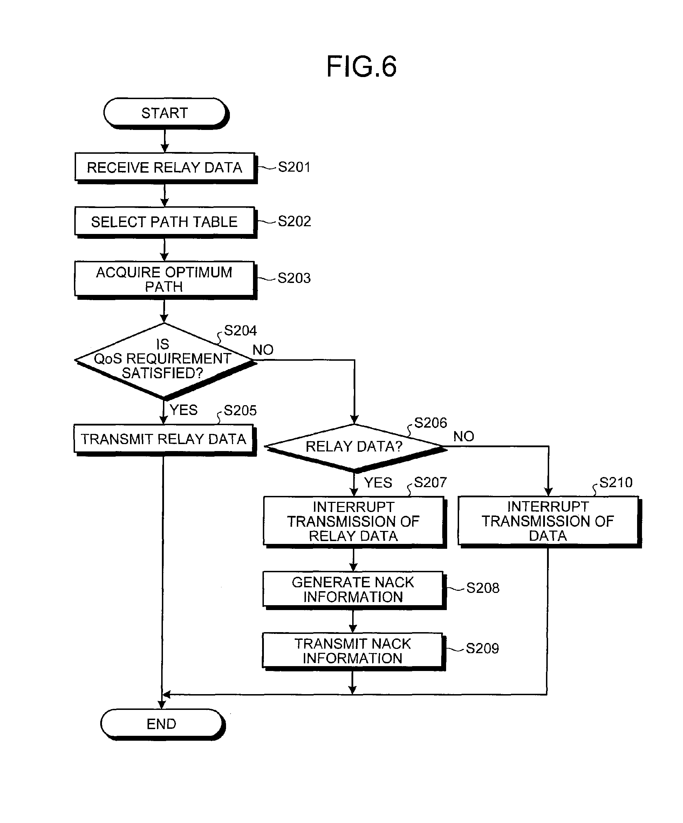

Next, a data relay method performed by the wireless communication device 100b having the above described configuration will be described with reference to a flowchart illustrated in FIG. 6. Hereinafter, a data relay method performed by the wireless communication device 100b will be described in connection with a case in which the relay data is received from the wireless communication device 100a.

In step S201, the reception unit 153 receives the relay data transmitted from the wireless communication device 100a. The relay data is output to the QoS judgment unit 154, and in step S202, the QoS judgment unit 154 selects the path table corresponding to the QoS requirement of the relay data from among the path tables for each QoS criterion stored in the optimum path storage unit 152. In step S203, the QoS judgment unit 154 acquires the optimum path corresponding to the destination wireless communication device of the relay data from the selected path table. That is, the QoS judgment unit 154 acquires the next node on the optimum path corresponding to the QoS requirement of the relay data and the optimum value representing the QoS of the optimum path.

Here, the optimum path stored in the optimum path storage unit 152 is updated based on the path information periodically received by the path evaluation unit 151. For this reason, when the wireless communication device on the optimum path has moved, the next node on the optimum path or the optimum value representing the QoS of the optimum path changes. As a result, even through the QoS judgment unit 104 of the wireless communication device 100a has judged that the QoS requirement of the relay data is satisfied by the optimum path, when the relay data is relayed by the wireless communication device 100b, it is not necessarily judged that the QoS requirement of the relay data is satisfied by the optimum path.

Therefore, in step S204, the QoS judgment unit 154 compares the QoS requirement of the relay data with the optimum value in the optimum path and judges whether or not the QoS requirement of the relay data is satisfied by the optimum path. When it is judged that the QoS requirement is satisfied by the optimum path (Yes in step S204), in step S205, the transmission unit 155 transmits the relay data to the next node on the optimum path. Here, since it is judged that the QoS requirement is satisfied by transmitting the relay data through the optimum path, the relay data transmitted by the transmission unit 155 does not act as unnecessary traffic. Therefore, interference caused by unnecessary traffic can be prevented from increasing.

However, when the QoS requirement is not satisfied even by the optimum path (No in step S204), transmission of data is interrupted. That is, in step S206, it is judged whether data unsatisfying the QoS requirement is the relay data or is data of which the transmission source is the wireless communication device 100b. When it is judged as being the data of which the transmission source is the wireless communication device 100b (No in step S206), in step S210, data transmission is interrupted. In this case, for example, the fact that data transmission is interrupted is notified to an application (not illustrated) of the wireless communication device 100b, and so the application performs, for example, a retransmission process.

In contrast, when it is judged that data unsatisfying the QoS requirement is the relay data (Yes in step S206), in step S207, the QoS judgment unit 154 discards the relay data, so that transmission of the relay data is interrupted. The QoS judgment unit 154 notifies the NACK information generation unit 156 of the fact that transmission of the relay data has been interrupted. In step S208, the NACK information generation unit 156 acquires the latest path information of the optimum path from the optimum path storage unit 152 and generates the NACK information that includes the latest path information of the optimum path and the fact that data transmission has been interrupted. In step S209, the NACK information generation unit 156 transmits the generated NACK information to the neighboring wireless communication devices.

As described above, in the present embodiment, when the QoS requirement of the relay data is not satisfied even by the optimum path corresponding to the QoS requirement, transmission of the relay data is interrupted by the wireless communication device 100b that relays the data. Therefore, traffic in which the QoS requirement is not satisfied can be prevented from increasing, and interference caused by a traffic increase can be reduced. Further, when transmission of the relay data is interrupted, the NACK information including the latest path information of the optimum path is transmitted to the neighboring wireless communication devices. Therefore, the neighboring wireless communication devices can update the information of the optimum path by using the NACK information as well as the path information packet.

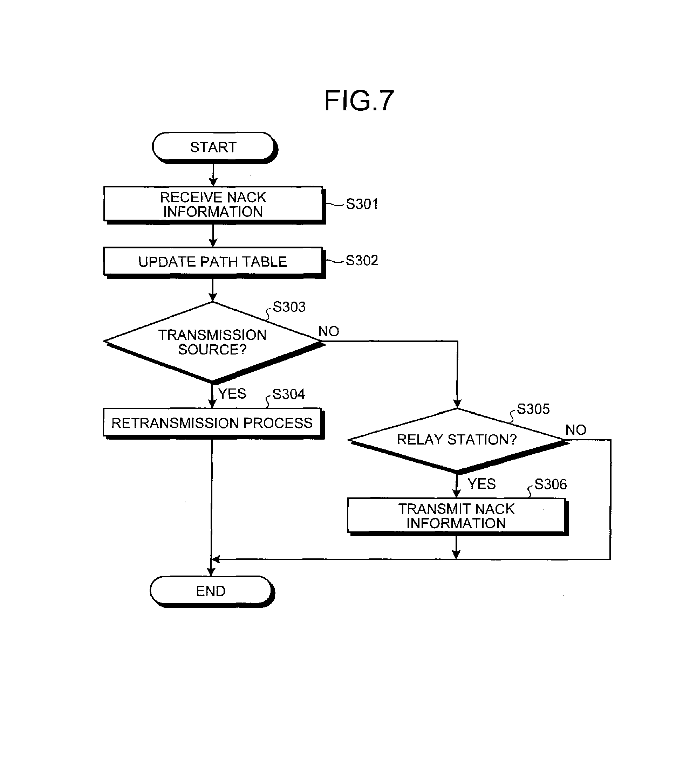

Next, a NACK reception process performed by the wireless communication device 100a will be described with reference to a flowchart illustrated in FIG. 7 in connection with a case in which transmission of the relay data has been interrupted. The NACK reception process performed by the wireless communication device 100a will be described below in connection with a case in which the NACK information is received from the wireless communication device 100b.

In step S301, the NACK information reception unit 106 receives the NACK information transmitted from the wireless communication device 100b. The NACK information is output to the path evaluation unit 101, and in step S302, the path evaluation unit 101 updates the path table stored in the optimum path storage unit 102 by using the latest path information of the optimum path included in the NACK information. That is, since the path information subsequent to the wireless communication device 100b on the optimum path through which the relay data has been actually transmitted is included in the NACK information, the path information is reflected on the path table.

When the path table of the optimum path storage unit 102 is updated, in step S303, the path evaluation unit 101 judges whether or not the NACK information includes the fact that transmission of data of which the wireless communication device 100a is the transmission source has been interrupted. When it is judged that the NACK information includes the fact that transmission of data of which the wireless communication device 100a is the transmission source has been interrupted (Yes in step S303), in step S304, for example, the retransmission process is executed by an application (not illustrated) of the wireless communication device 100a. In the retransmission process, since the path table of the optimum path storage unit 102 has been updated based on the NACK information, data is retransmitted through the appropriate transmission path according to the latest path information.

In contrast, when it is judged that the NACK information includes the fact that transmission of data of which a wireless communication device other than the wireless communication device 100a is the transmission source has been interrupted (No in step S303), in step S305, the path evaluation unit 101 judges whether or not the wireless communication device 100a has relayed the relay data. When it is judged that the wireless communication device 100a has relayed the relay data (Yes in step S305), in step S306, the NACK information transmission unit 107 reversely transmits the NACK information along the optimum path through which the relay data has been transmitted. That is, the NACK information is transmitted to an immediately previous wireless communication device on the optimum path through which the relay data has been transmitted.

At this time, since the latest path information to the destination wireless communication device is obtained based on the NACK information from the wireless communication device 100b, the NACK information transmitted by the NACK information transmission unit 107 includes the latest path information of the optimum path. That is, the NACK information transmission unit 107 transmits the NACK information including the latest information of the optimum path from the wireless communication device 100a to the destination wireless communication device. That is, when the NACK information is reversely transmitted along the optimum path and transmitted to the transmission source wireless communication device, each wireless communication device transmits the NACK information that includes the latest information of the optimum path from its own device to the destination wireless communication device. Therefore, the wireless communication devices on the optimum path from the transmission source wireless communication device to the wireless communication device 100a can update the path information of the optimum path to the latest state.

In addition, when it is judged that the wireless communication device 100a has not relayed the relay data and is simply one of the neighboring wireless communication devices that have received the NACK information from the wireless communication device 100b (No in step S305), the path table is updated, and then the process is finished. That is, when the wireless communication device 100b that has interrupted transmission of the relay data according to the QoS of the optimum path transmits the NACK information, even the neighboring wireless communication device that is not present on the optimum path receives the NACK information and updates the path table. Therefore, not only the wireless communication device on the optimum path but also most of wireless communication devices can maintain the path table at the latest state, whereby efficiency of searching for the optimum path can be improved.

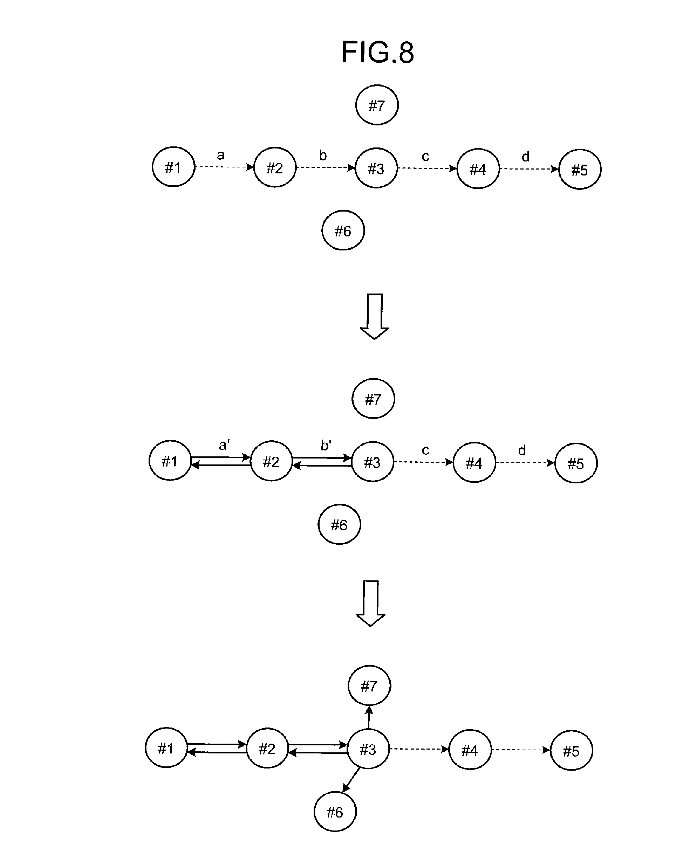

Next, a detailed example of a data relay according to the present embodiment will be described with reference to FIG. 8. A data relay in an ad-hoc network including wireless communication devices #1 to #7 will be described below. Here, it is assumed that the wireless communication device #1 serving as the transmission source wireless communication device transmits data in which the QoS requirement of the delay is within n milliseconds to the wireless communication device #5 serving as the destination wireless communication device. Further, it is assumed that as a result of evaluating the path in the wireless communication device #1, the delays between the wireless communication devices in the optimum path including the wireless communication devices #2 to #4 are a to d milliseconds as illustrated in the upper portion of FIG. 8.

At this time, when "a+b+c+d" milliseconds as the delay in the optimum path falls within n milliseconds that is the QoS requirement of data, the wireless communication device #1 transmits the data through the optimum path. It is assumed that at a time point when the data is transmitted up to the wireless communication device #3 on the optimum path, an actual delay time between the wireless communication devices #1 and #2 and an actual delay time between the wireless communication devices #2 and #3 are a' milliseconds and b' milliseconds, respectively, as illustrated in the middle of FIG. 8. In this case, when "a'+b'+c+d" falls within n milliseconds that is the QoS requirement of data, the wireless communication device #3 continuously transmits the data through the optimum path.

However, when "a'+b'+c+d" milliseconds exceeds n milliseconds that is the QoS requirement of data, the wireless communication device #3 interrupts transmission of data and transmits the NACK information to the wireless communication device #1 as illustrated in the middle of FIG. 8. The judgment on whether to interrupt transmission of data does not depend only on the actual delay time. For example, transmission of data may be interrupted even when each wireless communication device transmits and receives the path information packet and thus the optimum path is updated while data is transmitted up to the wireless communication device #3. That is, when the updated optimum path does not satisfy the QoS requirement of data, transmission of data is also interrupted, and the NACK information is transmitted to the transmission source wireless communication device.

The NACK information to be transmitted from the wireless communication device #3 includes the latest path information of the wireless communication devices #3 to #5. The wireless communication device #2 that has received the NACK information further adds the latest path information of the wireless communication devices #2 to #3 and transmits the NACK information including the latest path information of the wireless communication devices #2 to #5 to the wireless communication device #1. Therefore, the wireless communication device #1 can acquire the latest path information of the optimum path including the wireless communication devices #2 to #4 and execute retransmission of data according to the latest path information at the time of the data retransmission process.

Further, the NACK information transmitted from the wireless communication device #3 is received even by the neighboring wireless communication devices #6 and #7 as illustrated in the lower portion of FIG. 8. The wireless communication devices #6 and #7 update the path table based on the received NACK information. Therefore, the neighboring wireless communication devices #6 and #7 not only update the path table according to the path information packet but also update the path table according to the NACK information. As a result, the frequency of updating the path table increases, whereby the path table is constantly maintained at the latest state.

As described above, according to the present embodiment, the wireless communication device that relays the data judges whether or not the QoS requirement of the relay data is satisfied by comparing the QoS requirement of the relay data with the QoS of the latest optimum path corresponding to the QoS requirement. When the QoS requirement is satisfied, the wireless communication device relays the relay data to the next node on the optimum path. However, when the QoS requirement is not satisfied, the wireless communication device interrupts transmission of data and transmits the NACK information. Therefore, it is possible to suppress traffic from increasing due to transmission of data in which the QoS requirement is not satisfied, and it is possible to reduce interference on communication therearound caused by an increase in traffic.

Further, the wireless communication device that has received the NACK information updates the path table by using the latest path information included in the NACK information. Therefore, for example, when the data retransmission process is performed, the wireless communication device can efficiently perform retransmission of data by using the path table in which new information is stored.

Further, the data relay process and the NACK reception process executed by the wireless communication device according to the embodiments may be implemented by a program written in a computer executable language. In this case, by executing the program through the computer, the same effects as in the embodiments can be obtained. Further, the program may be recorded on a computer readable recording medium. In this case, the data relay process and the NACK reception process that are the same as in the embodiments may be implemented by reading and executing the program recorded on the recording medium through the computer.

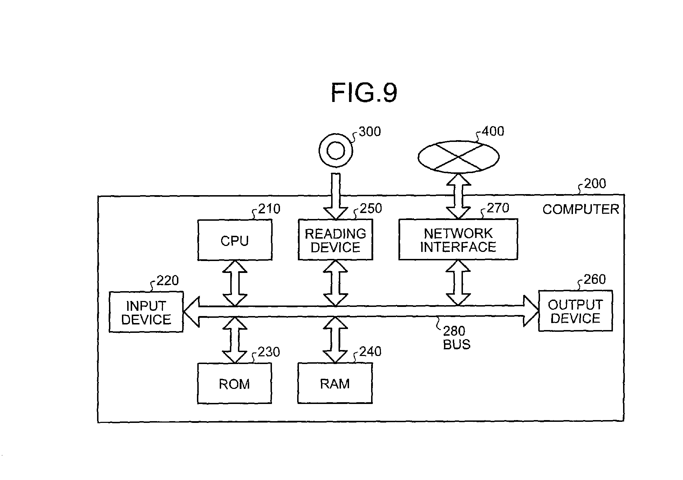

FIG. 9 is a block diagram illustrating a hardware configuration of a computer 200 that executes the data relay process or the NACK reception process. As illustrated in FIG. 9, the computer 200 includes a central processing unit (CPU) 210 that executes the program, an input device 220 that receives data, a read only memory (ROM) 230 that stores a variety of data, a random access memory (RAM) 240 that stores an operation parameter, a reading device 250 that reads a program for executing the data relay process or the NACK reception process from a recording medium 300 in which the program is recorded, an output device 260 such as a display, and a network interface 270 that performs data exchange with another computer via a network 400, which are connected with each other through a bus 280.

The CPU 210 implements the data relay process or the NACK reception process by reading the program recorded on the recording medium 300 through the reading device 250 and then executing the program. Further, examples of the recording medium 300 may include an optical disk, a flexible disk, a CD-ROM, and a hard disk. The program may be loaded into the computer 200 via the network 400. At this time, the network 400 may include a wireless network or a wire-line network.

## Claims

1. A wireless communication apparatus (100, 100a, 100b), comprising:
a storage unit (10, 102, 152) that stores optimum paths to each of a plurality of destination apparatuses, the optimum paths providing best quality of data transmission on each of criteria representing the quality of data transmission;
a reception unit (20, 103, 153) that receives data to be transmitted to any one of the plurality of destination apparatuses; and
a relay unit (30, 40, 104, 105, 154, 155) that relays the received data to a next apparatus on an optimum path stored in the storage unit (10, 102, 152) when required quality of the received data is satisfied by the optimum path corresponding to a criterion representing the required quality of the received data and the any one of the plurality of destination apparatuses, and interrupts transmission of the received data when the required quality of the received data is not satisfied by the optimum path.

2. The wireless communication apparatus (100, 100a, 100b) according to claim 1, wherein the relay unit:
comprises a judgment unit (30, 104, 154) that judges whether or not the required quality of the received data is satisfied by an optimum path stored in the storage unit (10, 102, 152) and corresponding to a criterion representing the required quality of the received data and the any one of the plurality of destination apparatuses; and
relays the received data to the next apparatus on the optimum path used in a judgment by the judgment unit (30, 104, 154) when the judgment unit (30, 104, 154) judges that the required quality of the received data is satisfied, and interrupts transmission of the received data when the judgment unit (30, 104, 154) judges that the required quality of the received data is not satisfied.

3. The wireless communication apparatus (100, 100b) according to claim 1,
further comprising a transmission unit that transmits interruption information representing that data transmission has been interrupted when transmission of the received data has been interrupted by the relay unit (30, 40, 154, 155).

4. The wireless communication apparatus (100, 100b) according to claim 3, wherein the transmission unit:
comprises a generation unit (50, 156) that generates interruption information including path information representing quality of a current status of the optimum path; and
transmits the interruption information generated by the generation unit (50, 156).

5. The wireless communication apparatus (100a, 100b) according to claim 1, further comprising:
a decision unit (101, 151) that is notified of a communication environment in a neighboring wireless communication apparatus and decides an optimum path for each of the plurality of destination devices based on the notified communication environment,
wherein the storage unit (102, 152) stores the optimum path decided by the decision unit (101, 151).

6. The wireless communication apparatus (100a) according to claim 5,
wherein the decision unit (101) acquires interruption information representing interruption of data transmission and quality of a current optimum path and decides a new optimum path based on the quality of the current optimum path included in the acquired interruption information.

7. The wireless communication apparatus (100a) according to claim 1, further comprising:
a reception unit (106) that receives interruption information representing interruption of data transmission from the next apparatus on the optimum path; and
a transmission unit (107) that transmits the interruption information received by the reception unit to a transmission source of the received data.

8. The wireless communication apparatus (100a) according to claim 7,
wherein the reception unit (106) receives interruption information including path information representing the quality of a current optimum path, and
the transmission unit (107) updates the path information included in the interruption information received by the reception unit based on a communication environment in the wireless communication apparatus and transmits the interruption information including the updated path information.

9. A data relay method comprising:
receiving data transmitted to one of a plurality of destination apparatuses;
judging whether or not required quality of the received data is satisfied by an optimum path to the one of the plurality of destination apparatuses, the optimum path stored in a storage unit storing optimum paths corresponding to each of the plurality of destination apparatuses and best quality of data transmission on each of criteria representing the quality of data transmission;
relaying data to the next apparatus on the optimum path used in the judging when it is judged such that the required quality of the received data is satisfied in the judging; and
interrupting transmission of the received data when it is judged such that the required quality of data is not satisfied in the judging.

10. A computer readable recording medium having stored therein a data relay program executed by a computer, the data relay program causing the computer to execute:
receiving data transmitted to one of a plurality of destination apparatuses;
judging whether or not required quality of the received data is satisfied by an optimum path to the one of the plurality of destination apparatuses, the optimum path stored in a storage unit storing optimum paths corresponding to each of the plurality of destination apparatuses and best quality of data transmission on each of criteria representing the quality of data transmission;
relaying data to the next apparatus on the optimum path used in the judging when it is judged such that the required quality of the received data is satisfied in the judging; and
interrupting transmission of the received data when it is judged such that the required quality of data is not satisfied in the judging.
